# EUROPÄISCHE PATENTSCHRIFT

(11) **EP 1 164 305 B1**
(45) Veröffentlichungstag und Bekanntmachung des Hinweises auf die Patenterteilung: **06.05.2004**
(21) Anmeldenummer: 01890182.7
(22) Anmeldetag: 12.06.2001
(51) Int. Cl.: F16D 3/74, F16D 3/76

(54) **Kupplungsglied**
Coupling device
Dispositif d'accouplement

(30) Priorität: 15.06.2000 AT 10312000
(43) Veröffentlichungstag der Anmeldung: 19.12.2001
(73) Patentinhaber: Ellergon Antriebstechnik GmbH, 5300 Hallwang/Salzburg (AT)
(72) Erfinder: Geislinger, Matthias, 5026 Salzburg (AT)
(74) Vertreter: Hübscher, Helmut, Dipl.-Ing.

(56) Entgegenhaltungen:
- EP-A- 0 352 344
- WO-A-99/20916
- DE-A- 3 109 388
- DE-A- 3 616 232
- FR-A- 2 668 805

## Beschreibung

Die Erfindung bezieht sich auf ein Kupplungsglied zum Einbau in eine drehmomentübertragende Antriebsverbindung mit Anschlußteilen zur Befestigung an den An- und Abtriebsseiten der Antriebsverbindung und einem zwischen Ringscheiben der Anschlußteile eingesetzten Ringkörper aus einem Elastomer zur Drehmomentübertragung, der an die Ringscheiben der Anschlußteile anvulkanisiert ist.

Solche Kupplungsglieder sind beispielsweise aus der US 1 790 516 oder der DE 310 9388 A bekannt und bestehen im wesentlichen aus einem oder mehreren gummielastischen Ringkörpern, die an Ringscheiben metallener Anschlußteile anvulkanisiert sind, so daß das Kupplungsglied über die Anschlußteile an den An- bzw. Abtriebsseiten der Antriebsverbindung befestigt werden kann und dabei der Ringkörper für eine drehelastische Momentübertragung sorgt. Durch die Elastizitätseigenschaften des Ringkörpers kommt es dabei zusätzlich zu einer Dämpfungswirkung und einer Verlagerungsfähigkeit, die aber recht eng begrenzt bleiben. Auch lassen sich diese Kupplungsglieder kaum an unterschiedliche Gegebenheiten der Antriebsverbindung anpassen und nicht zuletzt führt die Formgebung und die Bearbeitung der metallenen Anschlußteile und die Herstellung der erforderlichen Gummi-Metallverbindung zu einem entsprechenden Fertigungsaufwand.

Gemäß der AT 395 901 B gibt es auch bereits Kupplungsglieder aus faserverstärktem Kunststoff, die als Verbindungselement zwischen den beiden Hälften einer Wellenkupplung oder unmittelbar als Wellenteil in einem Antriebsstrang eingesetzt werden und eine einwandfreie Drehmomentübertragung mit sich bringen. Außerdem erlauben sie wegen der Biegefähigkeit ihrer membranförmigen Flanschteile den Ausgleich eines axialen und bei Vorhandensein beidseitiger Flanschteile sogar den Ausgleich eines radialen Versatzes der miteinander zu kuppelnden Antriebsteile, wobei allerdings auf eine Drehelastizität und eine Dämpfungswirkung bei der Drehmomentübertragung weitgehend zu verzichten ist.
Aus der WO 99/20 916 sind zylinderförmige, muffenartige Anschlußteile aus faserverstärktem Kunststoff für ein Kupplungsglied bekannt, wobei die beiden Anschlußteile über einen elastomeren Ringkörper miteinander verbunden sind.

Der Erfindung liegt daher die Aufgabe zugrunde, ein Kupplungsglied der eingangs geschilderten Art zu schaffen, das eine drehelastische und schwingungsdämpfende Drehmomentübertragung gewährleistet und sich zudem durch seine Anpassungs- und Verlagerungsfähigkeit auszeichnet.

Die Erfindung löst diese Aufgabe dadurch, daß die Anschlußteile aus Faserverbundkunststoff bestehen und die Ringscheiben der Anschlußteile eine zum freien Rand hin sich verjüngende Wandstärke besitzen. Durch die Kombination des Faserverbundkunststoffes mit der sich zum freien Rand hin verjüngenden Wandstärke der Anschlußteile mit einem Elastomer auf der Drehmomentübertragungsseite eröffnet sich auf einfache und elegante Weise die Möglichkeit, die Eigenschaften dieser Werkstoffe optimal zu nutzen und ein in weiten Bereichen an die unterschiedlichsten Bedingungen und Anforderungen einer Antriebsverbindung anpaßbares Kupplungsglied herzustellen. Je nach Wahl des zur Verfügung stehenden Volumen des elastomeren Ringkörpers bzw. je nach Ausgestaltung und Anordnung der den Ringkörper zwischen sich aufnehmenden membranartigen Ringscheiben der Anschlußteile kann es zu einem nahezu verdrehstarren oder zu einem besonders verdrehweichen Kupplungsglied kommen, das darüber hinaus winkelig, axial und auch radial verlagerungsfähig ist und das körperschallisolierend sowie axialschwingungsdämpfend und drehschwingungsdämpfend wirkt. Dabei bleibt der Herstellungsaufwand wegen der rationellen Erzeugung der Faserverbundkunststoffteile in den verschiedensten Ausgestaltungen gering und auch das Anvulkanisieren des Elastomers an den Faserverbundkunststoff bereitet keine Schwierigkeit.

Zur Anpassung des Kupplungsgliedes hinsichtlich seiner Elastizitäts-, Dämpfungs- und Verlagerungseigenschaften sowie hinsichtlich der geforderten Einbaumöglichkeiten ergeben sich unterschiedlichste konstruktive Varianten, wobei durch den jeweiligen Abstand der den Ringkörper zwischen sich aufnehmenden Ringscheiben das wirksame Volumen des elastomeren Ringkörpers vorbestimmt werden kann. So entstehen verschiedene Ausgestaltungen der Erfindung dadurch, daß der eine Anschlußteil eine Ringscheibe und der andere Anschlußteil zwei Ringscheiben aufweisen, wobei die ineinandergreifenden Ringscheiben zwischen sich den Ringkörper aufnehmen, daß der eine Anschlußteil eine Nabenhülse mit auswärts ragender Ringscheibe und der andere Anschlußteil einen äußeren Befestigungsflansch mit einwärts ragender Ringscheibe bilden, daß der eine Anschlußteil einen inneren Befestigungsflansch mit auswärts ragender Ringscheibe und der andere Anschlußteil einen äußeren Befestigungsflansch mit einwärts ragender Ringscheibe aufweisen, daß der eine Anschlußteil als Verbindungsteil für zwei andere Anschlußteile ausgebildet ist, welcher Verbindungsteil einen Rohrabschnitt mit beiderends wenigstens einer auswärts ragenden Ringscheibe aufweist, daß der eine Anschlußteil einen Rohrabschnitt bildet, der einerends in wenigstens eine auswärts ragende Ringscheibe und andemends in einen Befestigungsflansch übergeht, und daß der eine Anschlußteil zwei innere Befestigungsflansche mit auswärts ragenden Ringscheiben aufweist, welche Befestigungsflansche über Distanzhülsen miteinander verbunden sind.

Um dabei die sich mit dem Radius ändernden Kraft- und Bewegungsverhältnisse zu berücksichtigen, können die Ringscheiben zumindest der einen Anschlußteile entlang einer zur Kupplungsgliedachse koaxialen Kegelfläche verlaufen, so daß sich der Querschnitt des Ringkörpers mit zunehmendem Radius vergrößert.

Weiters können die Ringscheiben der Anschlußteile im Axialschnitt eine Wellung bilden, wodurch sich die Flexibilität der sich durch die Ringscheiben ergebenden Membranen beeinflussen lassen.

Zur Erhöhung der axialen Verlagerungsfähigkeit ist es auch möglich, die Ringscheiben der Anschlußteile mit radialen Schlitzen zu versehen.

Sind der Ringkörper und/oder die Anschlußteile in Segmente unterteilt, kommt es meist zu einer Vereinfachung der Kupplungsgliedmontage, die dann auch radial über eine Anschlußnabe erfolgen kann.

In der Zeichnung ist der Erfindungsgegenstand schematisch veranschaulicht, und zwar zeigen
- Fig. 1: ein erfindungsgemäßes Kupplungsglied hälftig im Axialschnitt,
- Fig. 2: dieses Kupplungsglied in Stirnansicht, wobei die rechte Hälfte eine ganzheitliche und die linke Hälfte eine in Segmente unterteilte Ausführungsform darstellen, sowie die
- Fig. 3, 4, 5, 6, 7, 8 und 9: weitere sieben Ausführungsbeispiele eines erfindungsgemäßen Kupplungsgliedes jeweils hälftig im Axialschnitt.

Zur drehmomentübertragenden Antriebsverbindung zwischen einer Nabe 1 und einem Außenkranz 2 bzw. zwischen zwei Naben oder zwei Außenkränzen der An- und Abtriebsseiten der Antriebsverbindung ist ein drehelastisches, schwingungsdämpfendes und verlagerungsfähiges Kupplungselement 3 vorgesehen. Dieses Kupplungselement 3 umfaßt zwei Anschlußteile 4, 5 aus einem Faserverbundkunststoff und einen an Ringscheiben 6, 7 der Anschlußteile 4, 5 anvulkanisierten Ringkörper 8 aus einem Elastomer, wobei die Anschlußteile 4, 5 zur Befestigung des Kupplungsgliedes 3 an den An- und Abtriebsseiten der Antriebsverbindung dienen und der Ringkörper 8 die Drehmomentenübertragung zwischen den Anschlußteilen übernimmt. Durch die gegenseitige Abstimmung der Werkstückeigenschaften des Faserverbundkunststoffes einerseits und des Elastomers anderseits zusammen mit der geeigneten Formgebung der Anschlußteile mit ihren Ringscheiben und des Ringkörpers 8 ergeben sich innerhalb weiter Bereiche beeinflußbare Übertragungseigenschaften hinsichtlich Schwingungsdämpfung, Drehelastizität und Verlagerungsfähigkeit.

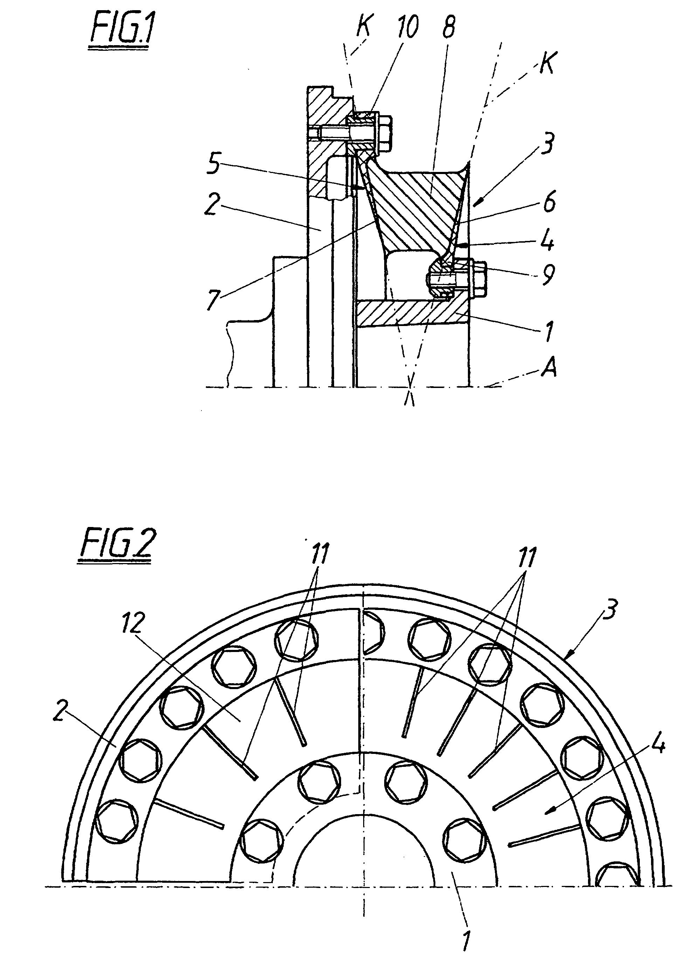

Gemäß dem Ausführungsbeispiel nach Fig. 1 und 2 bildet der Anschlußteil 4 einen inneren Befestigungsflansch 9, von dem die Ringscheibe 4 auswärts ragt, und der Anschlußteil 5 weist einen äußeren Befestigungsflansch 10 mit einer einwärts ragenden Ringscheibe 7 auf. Zwischen den beiden Ringscheiben 6, 7, die eine zum äußeren Rand hin sich verjüngernde Wandstärke aufweisen und entlang einer zur Achse A des Kupplungsgliedes 3 koaxialen Kegelfläche K verlaufen, sitzt der Ringkörper 8, der entsprechend dem gegenseitigen Abstand der Ringscheiben 6, 7 einen radial auswärts zunehmenden Querschnitt aufweist und daher in seinen werkstoffbedingten Eigenschaften an die sich mit zunehmendem Radius ändernden Kraft- und Bewegungsverhältnisse angeglichen ist.

Wie aus Fig. 2 hervorgeht, können die Ringscheiben 4 mit radialen Schlitzen 11 versehen sein, um die axiale Verlagerungsfähigkeit des Kupplungsgliedes zu erhöhen. Auch ist es möglich, das Kupplungsglied 3 nicht durchgehend aus Ring- und Rohrteilen zusammenzusetzen (Fig. 2, rechte Hälfte), sondern auch in Segmente 12 zu unterteilen, um die Montage zu erleichtern und die Segmente radial über eine Welle einbauen zu können.

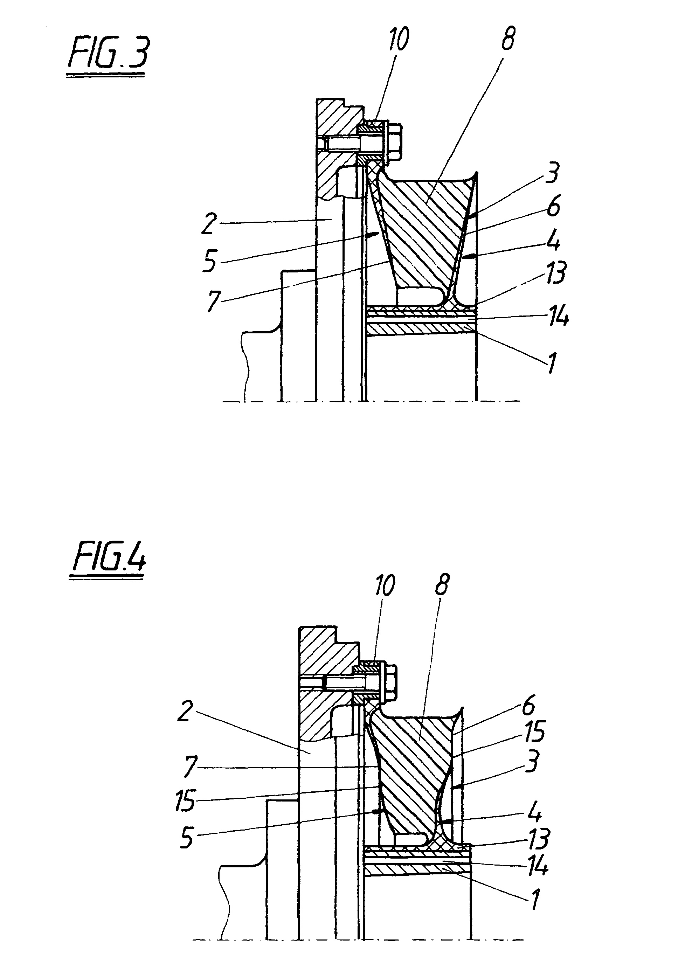

Beim Ausführungsbeispiel nach Fig. 3 bildet der eine Anschlußteil 4 eine Nabenhülse 13 mit einer auswärts ragenden Ringscheibe 4, welche Nabenhülse 13 auf der Nabe 1 der Antriebsverbindung drehfest aufgezogen ist. Der andere Anschlußteil 5 weist wiederum einen äußeren Befestigungsflansch 10 mit der einwärts ragenden Ringscheibe 7 auf, so daß der Ringkörper 8 mit seinem im wesentlichen trapezförmigen Querschnitt zwischen den Ringscheiben 6, 7 eingebettet ist. Zur Kühlung gibt es hier zusätzliche Luftkanäle 14 in der Nabe 1, um die Luftzirkulation im Bereich des Kupplungsgliedes 3 zu verbessern.

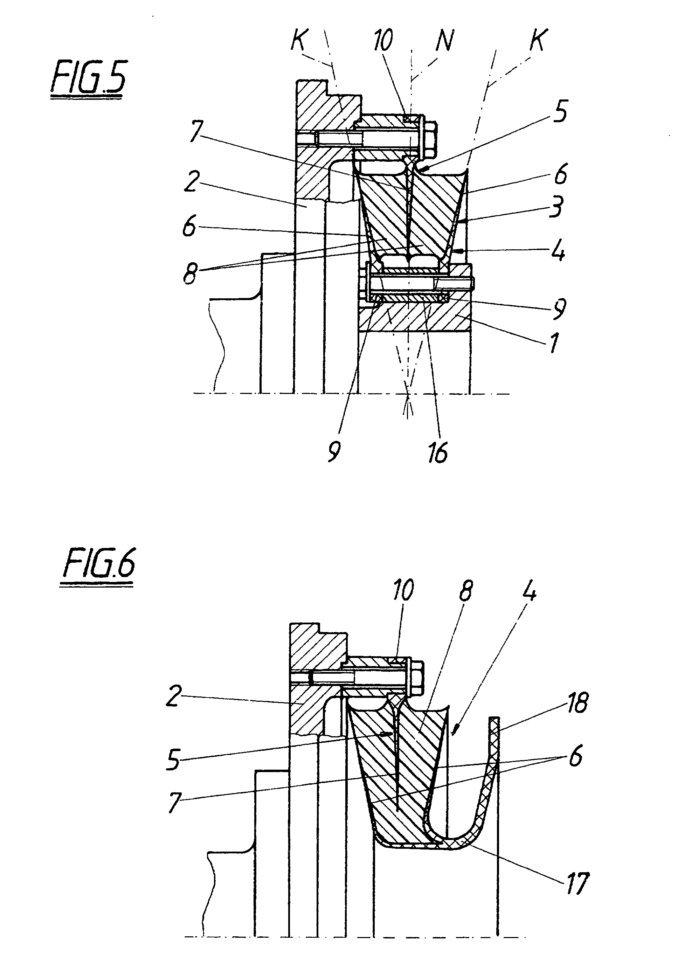

Das Ausführungsbeispiel gemäß Fig. 4 ist mit dem gemäß Fig. 3 vergleichbar, wobei hier lediglich die Ringscheiben 6, 7 der Anschlußteile 4, 5 im Axialschnitt eine Wellung 15 bilden.

Gemäß dem Ausführungsbeispiel nach Fig. 5 umfaßt der Anschlußteil 4 zwei Befestigungsflansche 9 mit auswärts ragenden Ringscheiben 6, welche Befestigungsflansche 9 über Distanzhülsen 16 miteinander verbunden sind. Der Anschlußteil 5 weist wiederum einen äußeren Befestigungsflansch 10 mit einer einwärts ragenden Ringscheibe 7 auf, wobei die Ringscheibe 7 mittig zwischen die beiden anderen Ringscheiben 6 eingreift. Die beiden äußeren Ringscheiben 6 verlaufen entlang von Kegelflächen K, die mittlere Ringscheibe 7 hingegen erstreckt sich in einer Achsnormalebene N und der Ringkörper 8 sitzt beidseitig zwischen den Ringscheiben 6 und 7.

Gemäß dem Ausführungsbeispiel nach Fig. 6 ist der Anschlußteil 4 mit einem Rohrabschnitt 17 versehen, der einerends in zwei auswärts ragende Ringscheiben 6 und andernends in einen Befestigungsflansch 18 übergeht. Auch hier greift der andere Anschlußteil 5, der aus einem Befestigungsflansch 10 mit einwärts ragender Ringscheibe 7 besteht, mit seiner Ringscheibe 7 mittig zwischen die sich konisch öffnenden Ringscheiben 6 des Anschlußteiles 4 ein und der Ringkörper 8 ist dementsprechend zwischen den Ringscheiben 6 und 7 eingebettet.

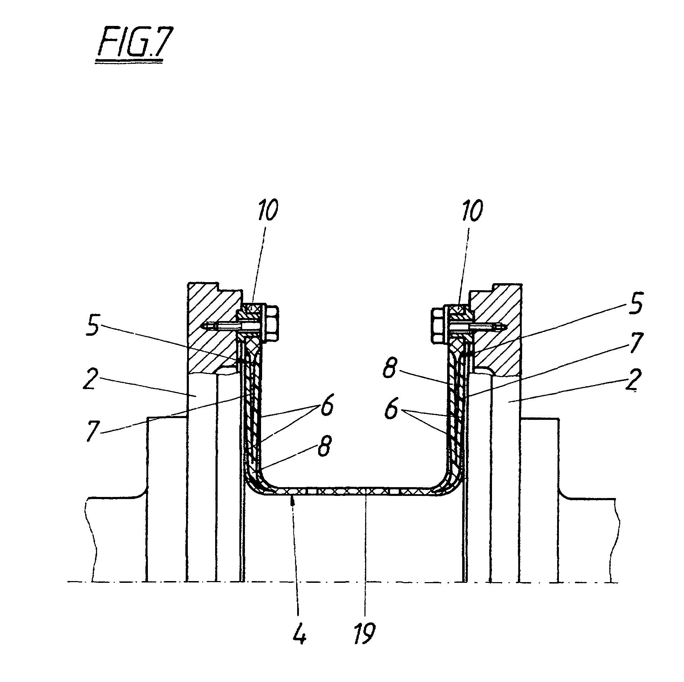

Gemäß dem Ausführungsbeispiel nach Fig. 7 bildet der eine Anschlußteil 4 einen Rohrabschnitt 19, der beiderends in zwei auswärts ragende Ringscheiben 6 übergeht und als Verbindungsteil für zwei andere Anschlußteile 5 dient. Diese Anschlußteile 5 weisen einen äußeren Befestigungsflansch 10 mit einer einwärts ragenden Ringscheibe 7 auf, die zwischen die beiden anderen Ringscheiben 6 unter Zwischenlage des Ringkörpers 8 eingreift. Die Befestigung des Kupplungsgliedes 3 erfolgt hier an zwei Außenkränzen 2 der Antriebsverbindung über die beiden gleichen Anschlußteile 5, denen zur Verbindung der Anschlußteil 4 zugeordnet ist.

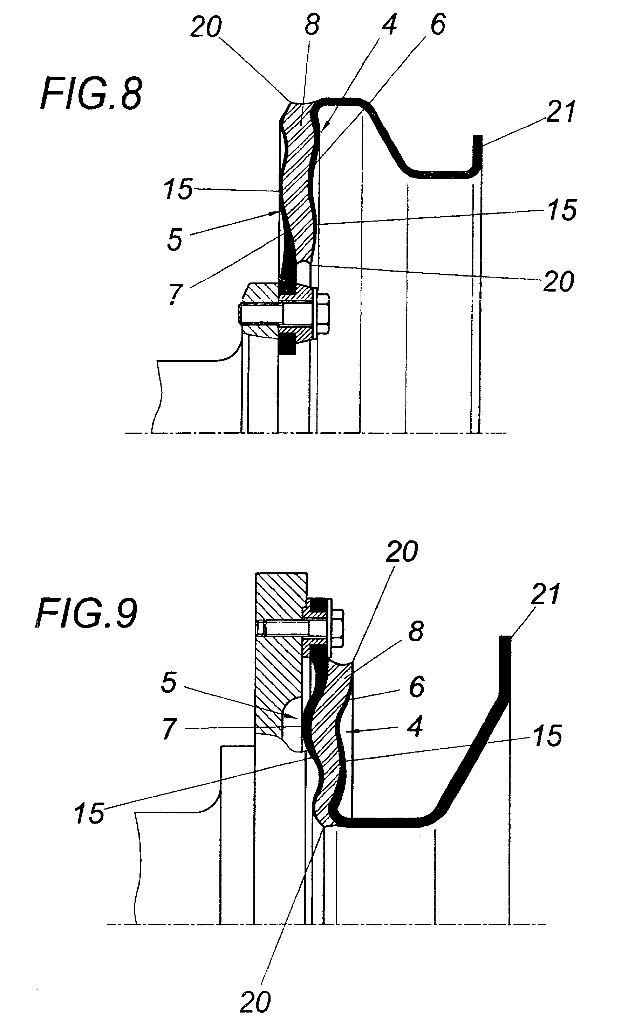

Die Ausführungsbeispiele nach den Fig. 8 und 9 besitzen ebenso wie das Ausführungsbeispiel gemäß Fig. 4 Ringscheiben 6, 7 die im Axialschnitt eine Wellung 15 bilden und eine sich zum freien Rand 20 hin verjüngende Wandstärke besitzen. Dabei sind die Ringscheiben 6, 7 als zusammenwirkende Membranteile ausgeführt, die sowohl eine axiale, als auch eine winkelige Verlagerung der Flanschteile zueinander gestatten. Eine sehr platzsparende Anordnung ergibt sich, wenn beispielsweise je ein Kupplungsglied gemäß Fig. 8 und ein Kupplungsglied gemäß Fig. 9 über die Flansche 21 miteinander verbunden werden. Dadurch können beispielsweise auf besonders einfache Weise ein Flansch großen Durchmessers, wie der einer Schwungscheibe und ein Flansch kleineren Durchmessers, wie der eines Getriebes, antriebsverbunden werden.

## Patentansprüche

1. Kupplungsglied (3) zum Einbau in eine drehmomentübertragende Antriebsverbindung mit Anschlußteilen (4, 5) zur Befestigung an den An- und Abtriebsseiten der Antriebsverbindung und einem zwischen Ringscheiben (6, 7) der Anschlußteile (4, 5) eingesetzten Ringkörper (8) aus einem Elastomer zur Drehmomentübertragung, der an die Ringscheiben (6, 7) der Anschlußteile (4, 5) anvulkanisiert ist, **dadurch gekennzeichnet, daß** die Anschlußteile (4, 5) aus Faserverbundkunststoff bestehen und die Ringscheiben (6, 7) der Anschlußteile (4, 5) eine zum freien Rand hin sich verjüngende Wandstärke besitzen.

2. Kupplungsglied nach Anspruch 1, **dadurch gekennzeichnet, daß** der eine Anschlußteil (5) eine Ringscheibe (7) und der andere Anschlußteil (4) zwei Ringscheiben (6) aufweisen, wobei die ineinandergreifenden Ringscheiben (6, 7) zwischen sich den Ringkörper (8) aufnehmen.

3. Kupplungsglied nach Anspruch 1, **dadurch gekennzeichnet, daß** der eine Anschlußteil (4) eine Nabenhülse (13) mit auswärts ragender Ringscheibe (6) und der andere Anschlußteil (5) einen äußeren Befestigungsflansch (10) mit einwärts ragender Ringscheibe (7) bilden.

4. Kupplungsglied nach Anspruch 1, **dadurch gekennzeichnet, daß** der eine Anschlußteil (4) einen inneren Befestigungsflansch (9) mit auswärts ragender Ringscheibe (6) und der andere Anschlußteil (5) einen äußeren Befestigungsflansch (10) mit einwärts ragender Ringscheibe (7) aufweisen.

5. Kupplungsglied nach Anspruch 1, **dadurch gekennzeichnet, daß** der eine Anschlußteil (4) als Verbindungsteil für zwei andere Anschlußteile (5) ausgebildet ist, welcher Verbindungsteil einen Rohrabschnitt (19) mit beiderends wenigstens einer auswärts ragenden Ringscheibe (6) aufweist.

6. Kupplungsglied nach Anspruch 1, **dadurch gekennzeichnet, daß** der eine Anschlußteil (4) einen Rohrabschnitt (17) bildet, der einerends in wenigstens eine auswärts ragende Ringscheibe (6) und andernends in einen Befestigungsflansch (18) übergeht.

7. Kupplungsglied nach Anspruch 1, **dadurch gekennzeichnet, daß** der eine Anschlußteil (4) zwei innere Befestigungsflansche (9) mit auswärts ragenden Ringscheiben (6) aufweist, welche Befestigungsflansche (9) über Distanzhülsen (16) miteinander verbunden sind.

8. Kupplungsglied nach einem der Ansprüche 1 bis 7, **dadurch gekennzeichnet daß** die Ringscheiben (6, 7) zumindest der einen Anschlußteile (4, 5) entlang einer zur Kupplungsgliedachse (A) koaxialen Kegelfläche (K) verlaufen.

9. Kupplungsglied nach einem der Ansprüche 1 bis 8, **dadurch gekennzeichnet, daß** die Ringscheiben (6, 7) der Anschlußteile (3, 4) im Axialschnitt eine Wellung (15) bilden.

10. Kupplungsglied nach einem der Ansprüche 1 bis 9, **dadurch gekennzeichnet, daß** die Ringscheiben (6, 7) der Anschlußteile (4, 5) radiale Schlitze (11) aufweisen.

11. Kupplungsglied nach einem der Ansprüche 1 bis 10, **dadurch gekennzeichnet, daß** der Ringkörper (8) und/oder die Anschlußteile (4, 5) in Segmente (12) unterteilt sind.

## Claims

1. A coupling element (3) for incorporation in a torque-transmitting drive connection, the element comprising connecting parts (4, 5) for fastening to the driving and driven sides of the drive connection and a torque-transmitting elastomeric annular member (8) inserted between annular plates (6, 7) of the connecting parts (4, 5) and vulcanised on to the annular plates (6, 7) of the connecting parts (4, 5), **characterised in that** the connecting parts (4, 5) are of composite fibre plastic and the annular plates (6, 7) of the connecting parts (4, 5) have a wall thickness which tapers towards the free edge.

2. A coupling element according to claim 1, **characterised in that** one connecting part (5) comprises an annular plate (7) and the other connecting part (4) comprises two annular plates (6), wherein the interlocking annular plates (6, 7) receive the annular member (8) between them.

3. A coupling element according to claim 1, **characterised in that** one connecting part (4) is in the form of a hub sleeve (13) with an outwardly projecting annular plate (6) and the other connecting part (5) is an outer fastening flange (10) with an inwardly projecting annular plate (7).

4. A coupling element according to claim 1, **characterised in that** one connecting part (4) comprises an inner fastening flange (9) with an outwardly projecting annular plate (6) and the other connecting part (5) comprises an outer fastening flange (10) with an inwardly projecting annular plate (7).

5. A coupling element according to claim 1, **characterised in that** one connecting part (4) connects two other connecting parts (5), the part (4) comprising a tubular portion (19) with at least one outwardly projecting annular plate (6) at each end.

6. A coupling element according to claim 1, **characterised in that** one connecting part (4) is a pipe portion (17) which merges into at least one outwardly projecting annular plate (6) at one end and a fastening flange (18) at the other end.

7. A coupling element according to claim 1, **characterised in that** one connecting part (4) comprises two inner fastening flanges (9) with outwardly projecting annular plates (6), the flanges (9) being connected to one another via spacer sleeves (16).

8. A coupling element according to any of claims 1 to 7, **characterised in that** the annular plates (6, 7) on at least one connecting part (4, 5) extend along a conical surface (K) coaxial with the axis (A) of the coupling element.

9. A coupling element according to any of claims 1 to 8, **characterised in that** the annular plates (6, 7) on the connecting parts (3, 4) are corrugated (15) in axial section.

10. A coupling element according to any of claims 1 to 9, **characterised in that** the annular plates (6, 7) on the connecting parts (4, 5) have radial slots (11).

11. A coupling element according to any of claims 1 to 10, **characterised in that** the annular member (8) and/or the connecting parts (4, 5) are divided into segments (12).

## Revendications

1. Dispositif d'accouplement (3) à monter dans une liaison d'entraînement à transmission de couple, comportant des parties d'accouplement (4, 5) pour la fixation aux côtés menant et mené de la liaison d'entraînement, et un corps annulaire (8) inséré entre des disques annulaires (6, 7) des parties de raccordement (4, 5), le corps annulaire étant réalisé en un élastomère et devant assurer la transmission d'un couple, ledit corps étant rapporté par vulcanisation sur les disques annulaires (6, 7) des parties d'accouplement (4, 5), **caractérisé en ce que** les parties d'accouplement (4, 5) sont formées d'une matière synthétique composite à base de fibres et les disques annulaires (6, 7) des parties de raccordement (4, 5) ont une épaisseur de paroi allant en s'effilant en allant en direction du bord libre.

2. Dispositif d'accouplement selon la revendication 1, **caractérisé en ce que** la première partie de raccordement (5) présente un disque annulaire (7) et l'autre partie de raccordement (4) présente deux disques annulaires (6), les disques annulaires (6, 7), s'engageant les uns dans les autres, supportant entre eux le corps annulaire (8).

3. Dispositif d'accouplement selon la revendication 1, **caractérisé en ce que** la première partie de raccordement (4) forme une douille de moyeu (13), ayant un disque annulaire (6) faisant saillie vers l'extérieur, et l'autre partie de raccordement (5) forme une bride de fixation (10) extérieure, ayant un disque annulaire (7) en saillie vers l'intérieur.

4. Dispositif d'accouplement selon la revendication 1, **caractérisé en ce qu'**une première partie de raccordement (4) présente une bride de fixation intérieure (9), avec un disque annulaire (6) en saillie vers l'extérieur, et l'autre partie de raccordement (5) présente une bride de fixation (10) extérieure, avec un disque annulaire (7) en saillie vers l'intérieur.

5. Dispositif d'accouplement selon la revendication 1, **caractérisé en ce qu'**une première partie de raccordement (4) est réalisée en tant que partie de liaison pour deux autres parties de raccordement (5), cette partie de liaison présentant un tronçon tubulaire (19) comprenant, aux deux extrémités, au moins un disque annulaire (6) en saillie vers l'extérieur.

6. Dispositif d'accouplement selon la revendication 1, **caractérisé en ce qu'**une première partie de raccordement (4) forme un tronçon tubulaire (17), qui, à une extrémité, se transforme en au moins un disque annulaire (6) en saillie vers l'extérieur et, à l'autre extrémité, se transforme en une bride de fixation (18).

7. Dispositif d'accouplement selon la revendication 1, **caractérisé en ce qu'**une première partie de raccordement (4) présente deux brides de fixation (9) intérieures, ayant des disques annulaires (6) en saillie vers l'extérieur, les brides de fixation (9) étant reliées entre elles par des douilles d'espacement (16).

8. Dispositif d'accouplement selon l'une des revendications 1 à 7, **caractérisé en ce que** les disques annulaires (6, 7) d'au moins une des parties de raccordement (4, 5) s'étendent le long d'une face conique (K) coaxiale à l'axe (A) du dispositif d'accouplement.

9. Dispositif d'accouplement selon l'une des revendications 1 à 8, **caractérisé en ce que** les disques annulaires (6, 7) des parties de raccordement (3, 4) forment une ondulation (15) en observant en coupe axiale.

10. Dispositif d'accouplement selon l'une des revendications 1 à 9, **caractérisé en ce que** les disques annulaires (6, 7) des parties de raccordement (4, 5) présentent des fentes (11) radiales.

11. Dispositif d'accouplement selon l'une des revendications 1 à 10, **caractérisé en ce que** le corps annulaire (8) et/ou les parties de raccordement (4, 5) sont subdivisées en segments (12).
